(19) Europäisches Patentamt
European Patent Office
Office européen des brevets

(11) **EP 4 545 242 A1**

(12) **EUROPEAN PATENT APPLICATION**
published in accordance with Art. 153(4) EPC

(43) Date of publication:
**30.04.2025 Bulletin 2025/18**

(21) Application number: **24705344.0**

(22) Date of filing: **17.01.2024**

(51) International Patent Classification (IPC):
**B23K 26/362** (2014.01)   **B23K 37/04** (2006.01)
**B23K 26/082** (2014.01)   **B23K 26/16** (2006.01)
**B23Q 11/00** (2006.01)   **H01M 4/04** (2006.01)
**H01M 50/531** (2021.01)

(86) International application number:
**PCT/KR2024/000802**

(87) International publication number:
**WO 2025/058144 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023   KR 20230122521**

(71) Applicant: **Youil Energy Tech.Co., Ltd
Pyeongtaek-si, Gyeonggi-do 17708 (KR)**

(72) Inventor: **CHUNG, Youn Gil
Pyeongtaek-si, Gyeonggi-do 17708 (KR)**

(74) Representative: **Patentanwaltskanzlei
Matschnig & Forsthuber OG
Biberstraße 22
Postfach 36
1010 Wien (AT)**

(54) **NOTCHING SYSTEM AND NOTCHING METHOD**

(57)    The present invention discloses a notching system including: a frame; a power portion installed on the frame and configured to generate a rotational force at a speed synchronized with a movement speed of an electrode sheet; a jig installed on the frame and configured to rotate while being in contact with one surface of the electrode sheet by receiving the rotational force from the power portion; a close contact portion installed on the frame and configured to maintain contact between the jig and the electrode sheet passing through a notching area by being in contact with and supporting the other surface of the electrode sheet; and a laser irradiation portion installed on the frame and configured to irradiate the electrode sheet with a laser beam through a notching hole, wherein the jig is configured to comprise the notching hole formed on an outer peripheral surface in contact with the one surface of the electrode sheet. According to the present invention, it is possible to form precise notching lines by blowing air during laser notching to remove foreign matter, plasma, and scrap while preventing fluttering of the electrode sheet due to air.

Fig. 1

**EP 4 545 242 A1**

# Description

## Technical Field

The present invention relates to a notching system and method for manufacturing an electrode of a secondary battery, and more specifically, to a notching system and method for manufacturing an electrode used in a secondary battery by notching an electrode sheet using a laser.

## Background Art

Electrode sheets of secondary batteries are formed by coating a positive electrode active material and a negative electrode active material to a current collector and drying then thereafter. The electrode sheet may be divided into a region where an active material is coated and a region where an active material is not coated. Through a notching process on the region where an active material is coated and a notching process on the region where an active material is not coated, an electrode tab may be formed.

The notching process is a process of forming an electrode tab on an electrode sheet. The notched electrode sheet is cut to a predetermined length and loaded as a single sheet of electrodes.

A conventional notching apparatus includes a mold upper plate and a mold lower plate, which include a punching member. As the mold upper plate and the mold lower plate move, they punch an electrode sheet to form electrode tabs. However, the notching apparatus has a problem of high maintenance costs for the mold. Additionally, after some repetitions of notching processes, there is a need to replace components such as mold or punching member.

Recently, a notching apparatus that utilizes a laser, instead of using molds, to form electrode tabs is being developed. The laser notching apparatus irradiates an electrode sheet with a beam to form electrodes.

In relation to the present invention, Korean Patent Publication discloses a laser notching system comprising a pattern jig and a bottom jig. This related art uses a pattern jig with a penetrating pattern hole to form electrode tabs and bottom jig, whereas the present invention allows the removal of foreign matter by blowing air while preventing fluttering of the electrode during notching, without using a bottom jig. Thus, the related art and the present invention are distinguished from each other in terms of configuration and effects.

## Detailed Description of the Invention

## Technical problem

In laser processes, blowing air serves as a method used in various applications to improve process quality by removing debris generated during laser processing and smoothly eliminating plasma that interferes with the quality of process. When cutting a moving electrode, blowing air is a good way to improve cutting performance, but air may cause the electrode to vibrate or flutter which may lead to problems in cutting.

An object of the present invention is to improve cutting quality and ensure cutting performance by fixing an electrode sheet at a cutting portion and controlling fluttering while blowing air when cutting a moving electrode sheet.

Another object of the present invention is to provide a notching method capable of preventing foreign matter generated during laser notching, by blowing air, from being redeposited on the electrode surface and preventing fluttering of the electrode sheet due to air, and a notching system using the same.

Still another object of the present invention is to provide a notching method capable of preventing fluttering of an electrode sheet during notching using a jig in contact with the electrode sheet, and a notching system using the same.

Yet another object of the present invention is to provide a notching method using a jig with notching holes formed therein that rotates at a speed synchronized with the movement speed of an electrode sheet, and a notching system using the same.

Another object of the present invention is to provide a notching method that can prevent fluttering of an electrode sheet during notching while improving an existing structure that cannot blow air strongly due to support for the lower part of the electrode sheet and can form notching lines on the electrode sheet by irradiating a laser beam vertically downward onto the electrode sheet, and a notching system using the same.

The objects to be achieved by the present invention are not limited to the foregoing object, and additional objects, which are not mentioned herein, will be readily understood by those skilled in the art from the following description.

## Technical Solution

According an embodiment of the present invention to accomplish the objects of the present invention, there is provided a notching system including: a frame; a power portion installed on the frame and configured to generate a rotational force at a speed synchronized with a movement speed of an electrode sheet; a jig installed on the frame and configured to rotate while being in contact with one surface of the electrode sheet by receiving the rotational force from the power portion; a close contact portion installed on the frame and configured to brining the electrode sheet passing through a notching area into contact with the jig by being in contact with and supporting the other surface of the electrode sheet; and a laser irradiation portion installed on the frame and configured to irradiate the electrode sheet with a laser beam through a notching hole, wherein the jig is configured to comprise the notching hole formed on an outer peripheral surface in contact with the one surface of the electrode sheet.

The jig may include a first jig installed corresponding to a tab portion of the electrode sheet and a second jig installed corresponding to a bottom portion of the electrode sheet, and the laser irradiation portion may comprise a first irradiation portion installed corresponding to the tab portion of the electrode sheet and a second irradiation portion installed corresponding to the bottom portion of the electrode sheet.

The close contact portion may include a first roller placed on one side of the notching area with respect to a direction of movement of the electrode sheet and a second roller placed on the other side of the notching area.

The electrode sheet may be moved in left and right directions by an unwinding portion, the jig may be installed in contact with a top surface of the electrode sheet, and the close contact portion may be in contact with and support a bottom surface of the electrode sheet, allowing the top surface of the electrode sheet and the jig to make surface contact.

The laser irradiation portion may be configured such that a laser head that irradiates the laser beam is located inside the jig.

A plurality of notching holes may be formed in a 360-degree range on an edge of the jig such that an inner peripheral surface and an outer peripheral surface of a felloe rim of the jig communicate with each other therethrough.

The notching system may further include a dust collection portion installed in the notching area and configured to remove foreign matter, plasma, and scrap resulting from notching, wherein the dust collection portion may include a blower configured to separate the foreign matter, plasma, and scrap by generating wind and a suction portion configured to inhale the foreign matter, plasma, and scrap.

According another embodiment of the present invention to accomplish the objects of the present invention, there is provided a notching method performed by a notching system, including the steps of: continuously supplying an electrode sheet to a notching area where notching of the electrode sheet occurs; restraining fluttering of the electrode sheet moving by the supply; and performing notching by irradiating the electrode sheet with a laser beam, wherein the restraining of fluttering of the electrode sheet includes the steps of: bringing the jig into contact with one surface of the electrode sheet in the notching area to contact and support the electrode sheet and contacting and supporting the electrode sheet toward a contact surface between the jig and the electrode sheet in front and rear of the contact surface.

The bringing of the jig into contact with one surface of the electrode sheet may include the step of rotating the jig by bringing an outer peripheral surface of the jig with a plurality of notching holes formed therein into contact with one surface of the electrode sheet, and the contacting and supporting of the electrode sheet may include the step of brining a top surface of the electrode sheet and the jig into surface contact with each other using a pair of rollers located respectively in front and rear of the notching area that are in contact with and support the electrode sheet.

Also, the performing of notching may include the steps of moving the notching hole formed in the jig at a speed synchronized with a movement speed of the electrode sheet and forming a notching line on the electrode sheet through the notching hole.

The performing of notching may use a plurality of notching holes located through inner and outer peripheral surfaces of a felloe rim of the jig.

In the supplying of the electrode sheet to the notching area, the electrode sheet is moved in left and right directions, and in the performing of notching, the laser beam is irradiated in a vertical direction onto one surface of the electrode sheet.

According another embodiment of the present invention to accomplish the objects of the present invention, there is provided a notching system including a frame; a power portion installed on the frame and configured to generate a rotational force at a speed synchronized with a movement speed of an electrode sheet; a jig installed on the frame and configured to rotate while being in contact with one surface of the electrode sheet by receiving the rotational force from the power portion; a close contact portion installed on the frame and configured to maintain contact between the jig and the electrode sheet passing through a notching area by being in contact with and supporting the other surface of the electrode sheet; and a laser irradiation portion installed on the frame and configured to irradiate the electrode sheet with a laser beam through a notching hole, wherein the jig is configured to comprise the notching hole formed on an outer peripheral surface in contact with the one surface of the electrode sheet.

The jig may include a first jig installed corresponding to a tab portion of the electrode sheet and a second jig installed corresponding to a bottom portion of the electrode sheet, and the laser irradiation portion may comprise a first irradiation portion installed corresponding to the tab portion of the electrode sheet and a second irradiation portion installed corresponding to the bottom portion of the electrode sheet.

The close contact portion may include a first roller and a second roller that are placed on both left and right sides of the jig, respectively.

The electrode sheet may be supplied in left and right directions by an unwinding portion, the jig may be installed in contact with an upper surface of the electrode sheet, and the close contact portion may be in contact with and support a lower surface of the electrode sheet, allowing the upper surface of the electrode sheet and the jig to make surface contact.

The laser irradiation portion may be configured such that a scanner that irradiates the laser beam is located inside the jig.

The notching hole may be formed in plurality, through which an inner peripheral surface and an outer peripheral surface of a felloe rim of the jig communicate with each other.

The notching system may further include a dust collection portion installed in the notching area and configured to remove foreign matter generated during notching, wherein the dust collection portion may include a blower configured to separate the foreign matter by generating wind and a suction portion configured to inhale the foreign matter.

The blower may be positioned higher than an inner side of the jig and an inner peripheral surface of the felloe rim with reference to the felloe rim of the jig and the suction portion may be positioned at a height that encompasses an upper part and a lower part with reference to an outer side of the jig and the inner peripheral surface of the felloe rim.

According to another embodiment of the present invention to accomplish the objects of the present invention, there is provided a notching method performed by a notching system, including the steps of: continuously supplying an electrode sheet to a notching area; bringing a jig into close contact with the electrode sheet in the notching area; and performing notching by irradiating the electrode sheet with a laser beam, wherein the bringing of the jig into close contact with the electrode sheet may include the steps of: bringing a curved surface of the jig into contact with one surface of the electrode sheet in the notching area and maintaining contact between the jig and the electrode sheet on one side and the other side of a contact surface between the jig and the electrode sheet.

The bringing of the jig into close contact with the electrode sheet in the notching area may include the steps of bringing an outer peripheral surface of the jig with a plurality of notching holes formed therein into contact with the electrode sheet and bringing rollers, the electrode sheet, and the jig into close contact with one another at positions on one side and the other side of the notching area.

The performing of notching may include the steps of rotating the jig in synchronization with a movement speed of the electrode sheet and forming a notching line on the electrode sheet through the notching hole.

The performing of notching may utilize a plurality of notching holes formed through which an inner peripheral surface and an outer peripheral surface of a felloe rim of the jig communicate with each other.

In the supplying of the electrode sheet to the notching area, the electrode sheet is moved in left and right directions, and in the performing of notching, the laser beam is irradiated in a vertical direction onto one surface of the electrode sheet.

The details of other embodiments are incorporated in "Detailed Description of the Invention" and accompanying "Drawings".

The advantages and/or features, and schemes of achieving the advantages and features of the present invention will be apparently comprehended by those skilled in the art based on the embodiments, which are detailed later in detail, together with accompanying drawings.

However, the present invention is not limited to the following embodiments but includes various applications and modifications. The embodiments will make the disclosure of the present invention complete, and allow those skilled in the art to completely comprehend the scope of the present invention. The present invention is only defined within the scope of accompanying claims.

**Advantageous Effects**

According to the present invention, electrode tabs may be formed while the electrode sheet is supported using a jig synchronized with the movement speed of the electrode sheet.

In addition, a curved jig is used to support the moving electrode sheet, and a laser irradiation trajectory may be controlled to match the relative speed of the moving electrode sheet.

Furthermore, by synchronizing the movement speed of the electrode sheet with the rotation speed of the jig, notching can be performed while the electrode sheet is in contact and supported.

The effects achievable by the notching system and notching method in accordance with the present invention are not limited to the foregoing effects, and additional effects, which are not mentioned herein, will be readily understood by those skilled in the art from the following description.

**Brief Description of Drawings**

FIG. 1 is an exemplary view of a notching system according to an embodiment of the present invention.

FIG. 2 is a front view of a notching system according to an embodiment of the present invention.

FIG. 3 is a rear view of a notching system according to an embodiment of the present invention.

FIG. 4 is a right side view of a notching system according to an embodiment of the present invention.

FIG. 5 is a left side view of a notching system according to an embodiment of the present invention.

FIG. 6 is a plan view of a notching system according to an embodiment of the present invention.

FIG. 7 is an enlarged view of a notching system according to an embodiment of the present invention.

FIG. 8 is a cross-sectional view of a notching system according to an embodiment of the present invention.

FIG. 9 is an exemplary view showing a jig, an electrode sheet, and a close contact portion in a notching system according to an embodiment of the present invention.

FIG. 10 is a flowchart of a notching method according to an embodiment of the present invention.

FIG. 11 is a flowchart of a notching method according to an embodiment of the present invention.

## Mode for Invention

Before describing the present invention in detail, terms and words used herein should not be construed as being unconditionally limited in a conventional or dictionary sense, and the inventor of the present invention can define and use concepts of various terms appropriately as needed in order to explain the present invention in the best way. Furthermore, it should be understood that these terms and words are to be construed in light of the meanings and concepts consistent with the technical idea of the present invention.

In other words, the terminology used herein is for the purpose of describing exemplary embodiments of the present invention, and is not intended to specifically limit the content of the present invention. It should be understood that these terms are defined terms in view of the various possibilities of the present invention.

Further, in this specification, the singular forms "a", "an," and "the" include plural referents unless the context clearly dictates otherwise. Also, it should be understood that the present invention can include a singular meaning even if it is similarly expressed in plural.

Where a component is referred to as "comprising" another component throughout this specification, unless specified otherwise, this means the component does not exclude any other element but may further include any other element.

Furthermore, when it is stated that an element is "inside or connected to another element," this element may be directly connected to another element or may be installed in contact with it. In addition, it may be installed spaced apart with a predetermined distance, and in the case where a component is installed to be spaced apart with a predetermined distance, a third component or means for fixing or connecting the component to another component may be present. Also, it should be noted that the description of the third component or means may be omitted.

On the other hand, it should be understood that there is no third component or means when an element is described as being "directly coupled" or "directly connected" to another element.

Likewise, other expressions that describe the relationship between the components, such as "between" and "right between," or "neighboring to" and "directly adjacent to" and such should be understood in the same spirit.

Further, in this specification, when terms such as "one surface," "other surface," "one side," "other side," "first," "second" and such are used, it is to clearly distinguish one component from another. It should be understood, however that the meaning of the component is not limited by such term.

It is also to be understood that terms related to positions such as "top," "bottom," "left," "right," and the like in this specification are used to indicate relative positions in the drawings for the respective components. Further, unless an absolute position is specified for these positions, it should not be understood that these position-related terms refer to absolute positions.

In addition, in this specification, the same reference numerals are used for the respective constituent elements of the drawings, and the same constituent elements are denoted by the same reference numerals even if they are shown in different drawings, that is, the same reference numerals indicate the same components throughout this specification.

It is to be understood that the size, position, coupling relationships and such, of each component constituting the present invention in the accompanying drawings, may be partially exaggerated or reduced or omitted to be able to sufficiently clearly convey the scope of the invention or for convenience of describing, and therefore the proportion or scale thereof may not be rigorous.

Also, in the following description of the present invention, a detailed description of a configuration that is considered to unnecessarily obscure the gist of the present invention, for example, a known technology including the prior art, may be omitted.

Hereinafter, embodiments of the present invention will be described in detail with reference to the accompanying drawings.

In the XYZ coordinate axes shown in each drawing, the x-axis direction is defined as a front-and-rear direction of a notching system 100 parallel to the width direction of an electrode sheet S, the y-axis direction is defined as the left-and-right direction of the notching system 100 parallel to the movement direction of the electrode sheet S, and the Z-axis direction is defined as the height direction of the notching system 100.

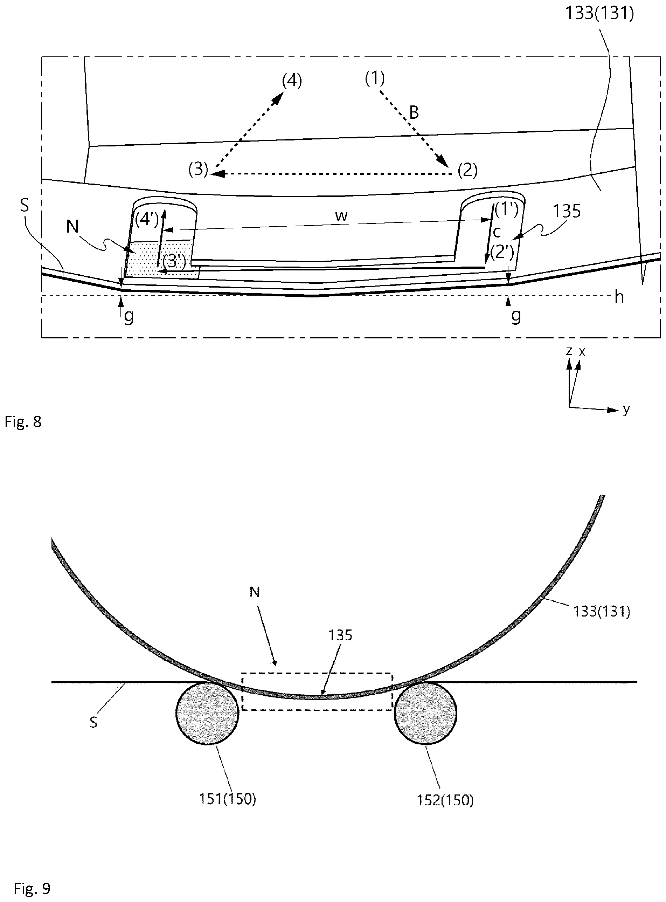

The electrode sheet S, wound on a reel, may be unwound by a device called an unwinding portion and supplied to a notching area N. The notching area N, described in FIG. 9, corresponds to the region on the electrode sheet S where notching is performed in real-time by a laser beam.

In the notching of the electrode sheet S using a laser beam, foreign matter, plasma, and scraps generated by the notching process may be removed by blowing air.

However, if the electrode sheet S does not make contact due to air and experiences movement, such as fluttering, errors may occur in the position of the notching line formed by the laser beam, causing a problem.

Thus, it is necessary to support the electrode sheet S to prevent fluttering. However, for synchronization and productivity, the electrode sheet S needs to be continuously supplied to the notching area N by the unwinding portion. At this time, since the moving electrode sheet S is required to be supported without being interrupted, there may be difficulties in supporting it. Additionally, supporting the electrode sheet S should not cause variations in its constant moving speed. Here, "supporting" means that the electrode sheet, moving due to unwinding, moves without fluttering caused by air.

The notching system 100 and a notching method S100 according to an embodiment of the present invention relate to a technology in which a notching line is formed on a continuously supplied electrode sheet S in a state in which the electrode sheet S does not flutter and an electrode is formed while removing foreign matter, plasma, and scrap by blowing air.

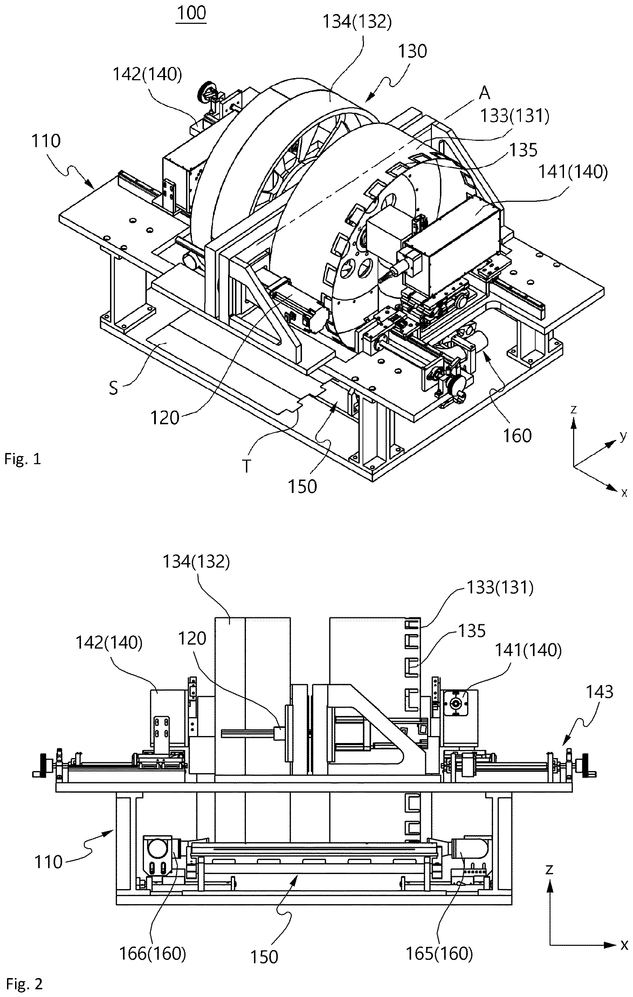

FIG. 1 is an exemplary view of a notching system according to an embodiment of the present invention.

Referring to FIG. 1, the notching system 100 is a system that performs notching using a laser beam to form electrode tabs T on the electrode sheet S and notching to cut off a part of the electrode sheet S. The electrode sheet S may be continuously supplied to a notching area N through a device called the unwinding portion.

The notching system 100 may be configured to include a frame 110, a power portion 120 for generating power, a jig 130 that performs the function of supporting the electrode sheet S during notching, a laser device 140, a close contact portion 150 that assists in maintaining contact between the electrode sheet S and the jig 130, and a dust collecting portion 160 for removing foreign matter.

The frame 110 has the function of coupling with and supporting the power portion 120, the jig 130, the laser device 140, the close contact portion 150, and the dust collecting portion 160. The frame 110 may include an upper plate, a lower plate, and four legs connecting the upper and lower plates.

The power portion 120 is installed on the frame 110 and may be configured to drive a first jig 131 and a second jig 132 that constitute the jig 130. The power portion 120 may include a motor and a shaft.

The jig 130 is installed on the frame 110 and has the function of receiving power from the power portion 120 to move notching holes 135. The first jig 131 may include a first wheel 133, and the second jig 132 may include a second wheel 134.

The notching holes 135 may be formed in the felloe rim of a first wheel 133. The notching holes 135 may be formed in a direction through which the inner and outer peripheral surfaces of the felloe rim communicate with each other. In other words, the notching holes 135 penetrates the felloe rim of the first wheel 133

The laser device 140 has the function of emitting a laser beam and may be configured to include a first laser irradiation portion 141, a second laser irradiation portion 142, and a laser controller. The first laser irradiation portion 141 and the second laser irradiation portion 142 may be arranged corresponding to a tab portion and a bottom portion of the electrode sheet S, respectively. The tab portion refers to the side where tabs of the electrode are formed on the electrode sheet S, and the bottom portion refers to the opposite side of the tab portion.

Through the laser notching of the laser device 140, electrode tabs T may be formed on the tab portion of the electrode sheet S in contact with the first jig 131. A mark for distinguishing between a straight notching line and adjacent electrodes may be notched on the bottom portion of the electrode sheet S in contact with the second jig 132 through the laser notching of the laser device 140.

The close contact portion 150 has the function of maintaining contact between one surface of the electrode sheet S, for example, the top surface, and the outer peripheral surface of the jig 130 by being in contact with and supporting the other surface of the electrode sheet S, for example, the bottom surface, and it may be configured to include first rollers 151, second rollers 152, and a position adjustment portion to adjust their positions.

The first rollers 151 and the second rollers 152 may make contact with and support the bottom surface of the electrode sheet S on both left and right sides of the notching area N, i.e., at the front and rear of the notching area N with respect to the movement direction of the electrode sheet S to maintain contact between one surface of the electrode sheet S, i.e., the top surface, and the outer peripheral surface of the jig 130. The electrode sheet S comes into surface contact with the outer peripheral surface of the jig 130 in the notching area N due to the close contact portion 150.

The dust collecting portion 160 has the function of removing foreign matter, plasma, and scrap generated during notching and may be configured to include a first dust collecting portion 161 and a second dust collecting portion 162. The dust collecting portion 160 may be installed by being coupled to the frame 110 below the jig 130 where the notching area N is located. Solid foreign matter and plasma may be generated during the laser beam irradiation, and if not removed in time, they may cause re-deposition on the electrode sheet, leading to deterioration in cutting quality. Pieces of the electrode sheet resulting from notching, namely scraps, should also be removed in a timely manner. Here, foreign matter includes by-products such as debris from the cutting action of the laser beam.

The dust collecting portion 160 not only removes foreign matter from cut during the notching of the electrode sheet S by the laser beam but also simultaneously removes scrap generated during notching. Conventionally, scrap removal does not occur in a notching portion, but in an embodiment of the present invention, scrap removal may be performed concurrently with notching through the dust collecting portion 160.

The first dust collecting portion 161 may be configured to include a first blower 163 that discharges air into the notching area N and a first suction portion 165 that inhales foreign matter, plasma, and scrap.

FIG. 2 is a front view of a notching system according to an embodiment of the present invention.

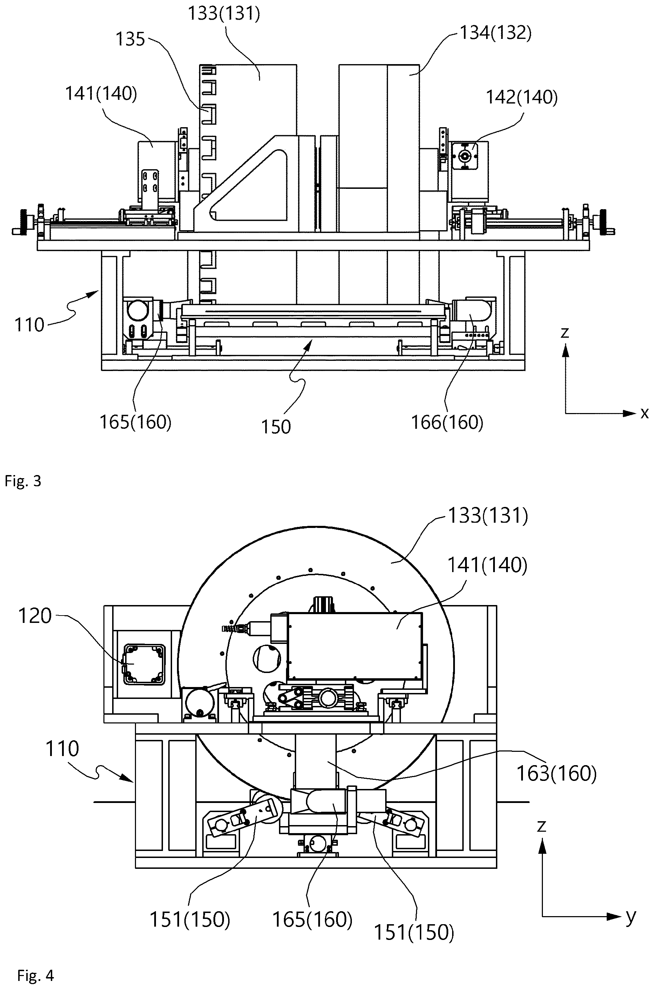

FIG. 3 is a rear view of a notching system according to an embodiment of the present invention.

Referring to FIGS. 2 and 3, the power portion 120, the first jig 131, and the second jig 132 may be installed on the upper plate. To allow the laser beam to be emitted onto the inner peripheral surface of the felloe rim of the jig 130, a scanner with a lens positioned in the first laser irradiation portion 141 may be installed to overlap with the first jig 131, and a scanner in the second laser irradiation portion 142 may be installed to overlap with the second jig 132. In other words, the scanner of the first laser irradiation portion 141 may be installed on the contact surface where the first jig 131 and the electrode sheet S make contact, and the scanner of the second laser irradiation portion 142 may be installed on the contact surface where the second jig 132 and the electrode sheet S make contact.

The laser controller 143 is installed on the frame 110 and has the function of adjusting the positions of the first laser irradiation portion 141 and the second laser irradiation portion 142, respectively.

The first suction portion 165 and a second suction portion 166 constituting the dust collecting portion 160 may be installed on a lower part and outer side of the jig 130, and on the lower plate.

The close contact portion 150 may be installed on the lower plate below the jig 130 to be in close contact with the jig 130, with the electrode sheet S interposed between them.

The electrode sheet S is placed between the jig 130 and the close contact portion 150, positioned to move in the Y-axis direction.

FIG. 4 is a right-side view of a notching system according to an embodiment of the present invention.

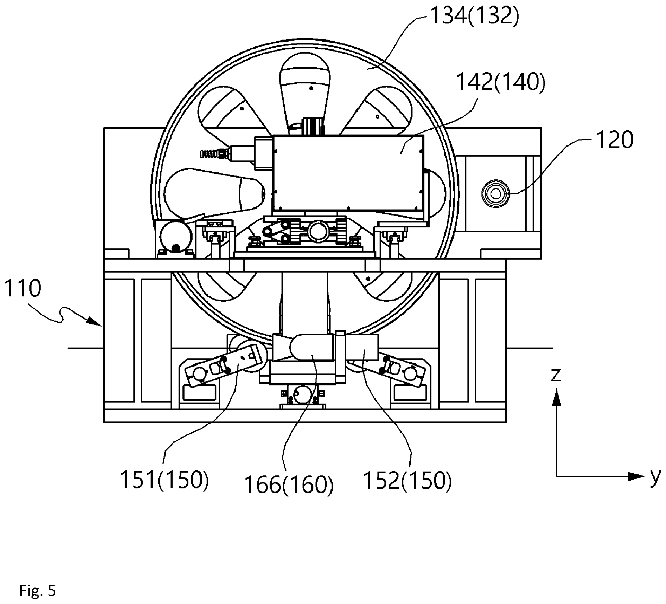

FIG. 5 is a left-side view of a notching system according to an embodiment of the present invention.

Referring to FIGS. 4 and 5, the first blower 163 and the second blower 164 constituting the dust collecting portion 160 are installed inside the first jig 131 and the second jig 132, respectively, and they have the function of blowing air to the outside of the jig 130 to remove foreign matter generated during notching in the notching area N.

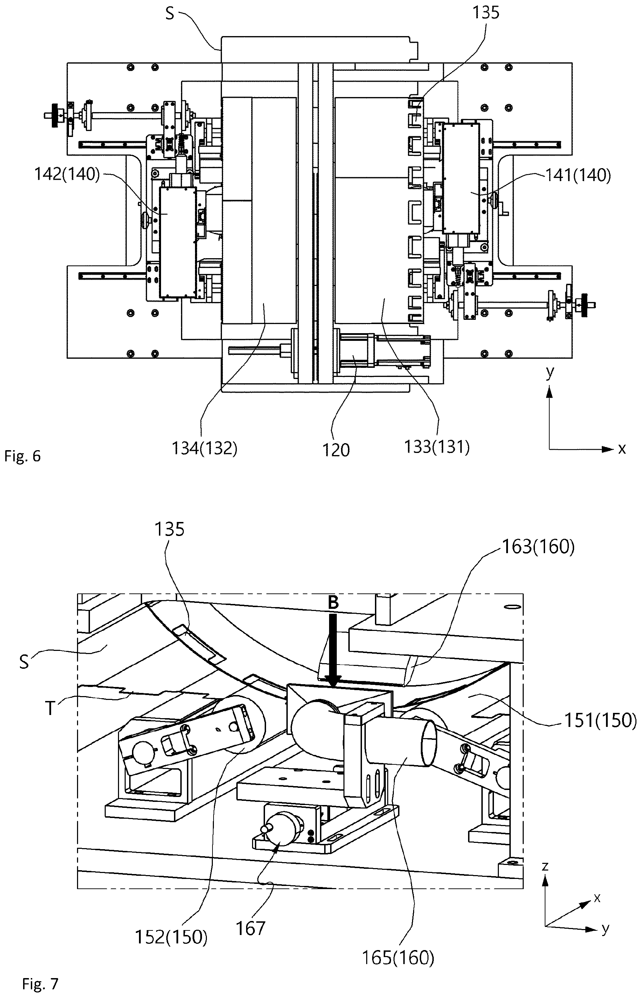

FIG. 6 is a plan view of a notching system according to an embodiment of the present invention.

Referring to FIG. 6, the notching system 100 is depicted as viewed from above. The frame 110 represents the upper plate. The jig 130 is positioned in the center of the frame 110, the electrode sheet S is placed below the jig 130, and the close contact portion 150 is disposed below the electrode sheet S. The first jig 131 constituting the jig 130 may be installed to overlap with the scanner of the first laser irradiation portion 141, and the second jig 132 may be installed to overlap with the scanner of the second laser irradiation portion 142.

FIG. 7 is an enlarged view of a notching system according to an embodiment of the present invention.

Referring to FIG. 7, the first jig 131 may include a first wheel 133, the first wheel 133 may include a felloe rim with inner and outer peripheral surfaces, and the notching hole 135 may be formed to communicate with the inner and outer peripheral surfaces.

The trajectory B of a laser beam irradiated on the notching hole 135 is depicted. The first rollers 151 and the second rollers 152 constituting the close contact portion 150 may be placed below the first jig 131.

The first suction portion 165 constituting the dust collecting portion 160 may be installed on the side of the notching area N corresponding to the tab portion of the electrode sheet S where the laser beam is irradiated. Air blown from the inside of the jig 130 may exit toward the first suction portion 165, carrying foreign matter and the like generated in the notching area N.

Additionally, a suction controller 167 for adjusting the position of the first suction portion 165 may be installed on the lower plate of the frame 110. Another suction controller 167 for adjusting the position of the second suction portion 166 may be installed on the lower plate of the frame 110.

Referring back to FIG. 7, the first blower 163 may be positioned higher than the inner side of the first jig 131 and the inner peripheral surface of the felloe rim with reference to the felloe rim of the first jig 131. The first suction portion 165 may be positioned at a height that encompasses the upper and lower parts with reference to the outer side of the first jig 131 and the inner peripheral surface of the felloe rim. The second dust collecting portion 162 may be configured to include the second blower 164 and the second suction portion 166. The second blower 164 and the second suction portion 166 may be arranged around the felloe rim of the second jig 132, symmetrically with the first blower 163 and the first suction portion 165.

FIG. 8 is a cross-sectional view of a notching system according to an embodiment of the present invention.

FIG. 9 is an exemplary view showing a jig, an electrode sheet, and a close contact portion in a notching system according to an embodiment of the present invention.

Referring to FIGS. 8 and 9, FIG. 8 depicts the notching hole 135 on the notching area N. The electrode sheet S in the notching area N is in contact with the outer peripheral surface of the first jig 131.

Referring to FIG. 8, the notching hole 135 formed on the first wheel 133 of the first jig 131 is depicted. The trajectory B (1) to (4) of the laser beam corresponding to the areas (1') to (4') of the notching hole 135 is described. Thus, while the trajectory (B) of the laser beam traverses (1) to (4), notching lines are formed on the notching area N of the electrode sheet S at positions (1) to (4). A length w signifies the width between notching lines. A gap g signifies the distance between the horizontal plane represented by the horizontal line h in the notching area N and the electrode sheet S.

Referring to FIG. 9, notching lines C actually formed on the electrode sheet S are perpendicular. However, as the notching hole 135 moves in the left and right directions due to the rotation of the first jig 131, the laser beam is observed to follow the diagonal trajectory B (1) to (4) because it moves at a speed relative to the speed of the first jig 131.

Referring back to FIG. 9, the electrode sheet S, the first jig 131 in contact with the electrode sheet S, and a pair of rollers 151 and 152 in contact with the electrode sheet S are depicted. Similar to FIG. 8, a plurality of notching holes 135 are formed in a 360-degree range on the felloe rim of the first jig 131. The area where the notching hole 135 in contact with the electrode sheet S among the plurality of notching holes 135 is located corresponds to the notching area N. In the notching area N, one surface of the electrode sheet S is in contact with the outer peripheral surface of the first jig 131, and a pair of rollers 151 and 152 constituting the close contact portion 150 makes contact with and supports the other surface of the electrode sheet S, allowing notching to be performed without fluttering of the electrode sheet S.

Referring again to FIGS. 7 and 9, since the top surface of the electrode sheet S is in close contact with the first wheel 133 and space is formed below the bottom surface, compared to a conventional technique where the bottom of the electrode sheet S is supported, a structure conducive to easy suction by the first suction portion 165 without accumulation of foreign matter and scrap due to laser notching may be formed. The air injection direction of the first blower 163 may be oriented toward the first suction portion 165 and inclined with respect to the electrode sheet S to effectively remove foreign matter, plasma, and scrap from the notching area 135.

The first blower 163 injects air toward the jig 130, i.e., toward the notching hole 135 formed on the first wheel 133, while the electrode sheet S is in close contact with the first wheel 133. Since the air is not directly injected onto the electrode sheet S, effective removal of foreign material, plasma, and scrap from the electrode sheet S may be achieved while preventing fluttering of the electrode sheet S. The removed foreign matter, plasma, and scrap may be inhaled by the first suction portion 165 arranged to encompass the upper and lower parts of the notching area N of the jig (130), i.e., the first jig (131).

Referring back to FIG. 8, the electrode sheet S in the notching area N where notching is performed forms a curved surface rather than a flat one. Therefore, due to the gap g across the entire notching area N, the size of the laser beam focus may vary. Since the laser beam is light collected through a lens, the diameter of the laser beam cross-section may vary depending on the focal length.

In optics, particularly in laser optics, the Rayleigh length $Z_R$ or Rayleigh range is the distance along the propagation direction of a laser beam from the waist to the place where the area of the cross section is doubled. A related parameter is the confocal parameter, b, which is twice the Rayleigh length. The Rayleigh length is particularly important when laser beams are modeled as Gaussian beams.

The minimum value of w(z) occurs at $w(0)=w_0$, by definition. At a distance $Z_R$ from the beam waist, the beam radius is increased by a factor $\sqrt{2}$ and the cross-sectional area also increases by a factor of 2.

According to Rayleigh length, the radius of the laser beam varies depending on the focal length of the laser beam. In the present invention, the electrode sheet S where notching occurs forms a curved surface rather than a flat one. Therefore, the center and both ends of the notching area N show a difference in height. Consequently, there may be differences in the diameter of the laser beam at the center and at both ends of the notching area N due to the difference in height between both ends and the center. Such differences may result in the formation of an uneven notching area or interference with the notching hole 135. To prevent these issues, the difference in the diameter of the laser beam has to be within an acceptable tolerance range. Determining this tolerance range is related to determining the radius of the wheels 133 and 134 constituting the jig 130. While designing larger radius wheels 133 and 134 is advantageous as it reduces the difference in height between the ends and the center of the notching area, it is preferable to determine the radius of the smallest wheels 133 and 134 within an acceptable tolerance range, considering economic and manufacturing convenience.

When the length of the electrode tab T generated by the notching system 100 according to an embodiment if the present invention is 20mm, the difference in height between both ends and the center of the notching area is 0.17mm. Therefore, the length of the radius of the wheels 133 and 134 is preferably determined to be around 600 mm. Additionally, the difference in height between the ends and the center of the notching area may also affect the minimum width of the notching hole 135. Considering the diameter of the laser beam that varies based on the Rayleigh length, it is preferable to make the width of the notching hole 135 several times greater than the diameter of the laser beam passing through the notching hole 135. In other words, the length of the radius of the wheels 133 and 134 may be determined based on the variation in diameter of the laser beam according to the Rayleigh length, utilizing the length of the notching hole 135 or the notching area N parallel to the direction of movement of the electrode sheet S.

The diameter of the wheels 133 and 134 may be influenced by the size of the laser irradiation portions 141 and 142. The laser irradiation portions 141 and 142 that irradiate the laser beam from the laser device 140 are preferably positioned vertically above the notching area N. To position the laser irradiation portions 141 and 142 vertically above the notching area N, the laser irradiation portions 141 and 142 must be located inside the wheels 133 and 134. Therefore, the diameter of the wheels 133 and 134 must be designed greater than the width and height of the laser irradiation portions 141 and 142.

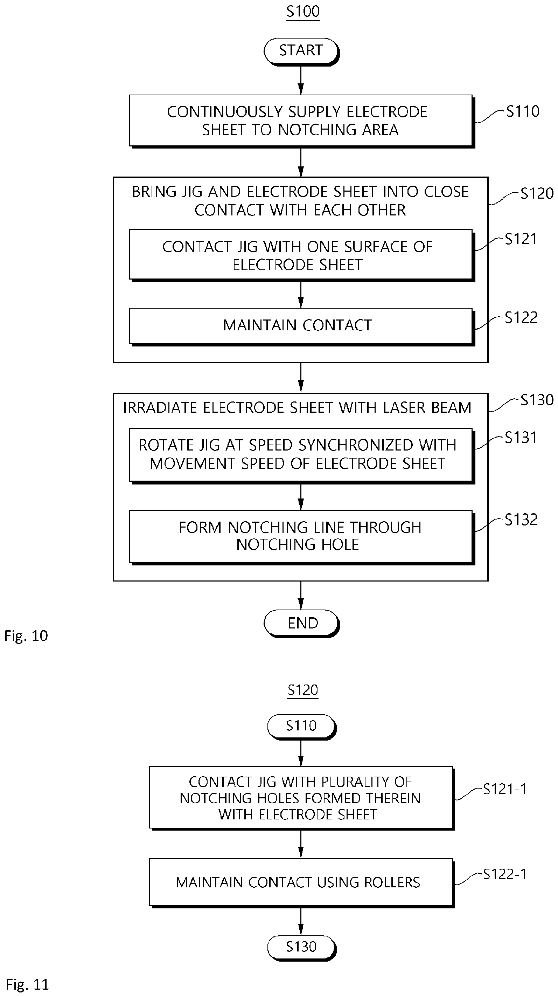

FIGS. 10 and 11 are flowcharts of a notching method according to an embodiment of the present invention.

Referring to FIGS. 10 and 11, steps comprising the notching method S100 performed by the notching system 100 are illustrated.

The notching method S100 may comprise steps of supplying an electrode sheet S (S110), bringing a jig into close contact with the electrode sheet S (S120), and irradiating the electrode sheet S with a laser beam (S130).

The electrode sheet S may be continuously supplied to a notching area N by an unwinding portion. The unwinding portion continuously supplies the electrode sheet S that corresponds to a strip-shaped metal plate. The unwinding portion may be configured to include a plurality of reels for supplying the electrode sheet S, and a servo motor. The electrode sheet S may be wound around the reels and stored in the form of a roll. Two reels may be arranged. One reel is for currently supplying the electrode sheet S, and the other reel is for preliminarily supplying the electrode sheet S. The servo motor drives the reel to supply the electrode sheet S.

In step S110 of supplying the electrode sheet S to the notching area N, the electrode sheet S is moved in the left and right directions, and in the notching step S130, the laser beam is characterized by being vertically irradiated onto one surface of the electrode sheet S. Although the drawings illustrate the notching system 100 where the notching area N is formed at the lower part of the jig 130, that is, in the 6 o'clock direction and the laser beam is irradiated onto the top surface of the electrode sheet S, the notching area N may be formed at the upper part of the jig 130, that is, in the 12 o'clock direction or another direction, and the irradiation direction of the laser beam may also be changed according to the position of the notching area N.

The notching system 100 may bring the jig 130 into close contact with the electrode sheet S (S120). The notching area N onto which the laser beam is irradiated is located in the area where the jig 130 and the electrode sheet S are in contact. Therefore, it is necessary for the electrode sheet S to be supported without fluttering. To prevent the electrode sheet S from fluttering while its movement is not stopped, the movement speed of the electrode sheet S should not be affected. Therefore, there is a challenge in moving the gripper holding the electrode sheet S at a speed synchronized with the movement speed of the electrode sheet S. Temporarily stopping the electrode sheet S reduces productivity and thus is not desirable.

According to an embodiment of the present invention, the notching system 100 allows the electrode sheet S to be supported by contact with the jig 130 in the notching area N.

Step S120 of bringing the jig 130 into close contact with the electrode sheet S may comprise step S121 of contacting a curved surface of the jig 130 with one surface of the electrode sheet S and step S122 of maintaining contact between the jig 130 and the electrode sheet S on one side and the other side of the contact surface between the jig 130 and the electrode sheet S.

Specifically, the notching system 100 may maintain contact between the jig 130 and the electrode sheet S on the left and right sides of the contact surface while bringing the jig 130 into contact with one surface of the electrode sheet S in the notching area. Here, to maintain contact, the first roller 151 and the second roller 152 may be used on the left and right sides of the contact surface, respectively (S122-1).

The notching system 100, in step S120 of bringing the jig 130 into close contact with the electrode sheet S, may bring the outer peripheral surface of the jig 130 with the plurality of notching holes 135 into contact with one surface of the electrode sheet S (S121) and bring the first roller 151, the second roller 152, the electrode sheet S, and the jig 130 into close contact with one another (S122-2).

The first roller 151 and the second roller 152 may make contact with the bottom surface of the electrode sheet S to bring the top surface of the electrode sheet S into surface contact with the jig 130. The first roller 151 and the second roller 152 are in the form of idle rollers without power, and may include a pressure spring as needed.

The notching step (S130) may comprise step S131 of rotating the jig 130 and step S132 of forming a notching line.

The notching system S100 may rotate the jig 130 at a speed synchronized with the movement speed of the electrode sheet S to move the notching hole 135 on the electrode sheet S (S131).

Then, the notching system S100 may form a notching line on the electrode sheet S through the notching hole 135 using a laser beam (S132). During the notching step S130, the notching system 100 is characterized by forming electrode tabs T on the tab portion of the electrode sheet S using the plurality of notching holes 135 located through the inner and outer peripheral surfaces of the felloe rim of the first jig 131.

Thus, according to an embodiment of the present invention, electrode tabs may be formed while the electrode sheet is supported by a jig synchronized with the movement speed of the electrode sheet.

In addition, a curved jig is used to support the moving electrode sheet, and the laser irradiation trajectory may be controlled to match the relative speed of the moving electrode sheet.

Furthermore, by synchronizing the movement speed of the electrode sheet with the rotation speed of the jig, notching can be performed while the electrode sheet is in contact and supported.

As described above, although exemplary embodiments of the present invention have been described, various embodiments disclosed in "Detailed Description of the Invention" are provided only for the illustrative purpose. Those skilled in the art can understand that various modifications, variations, and equivalents of the present invention are possible based on the above description.

In addition, since the present invention can be realized in various forms, the present invention is not limited to the above embodiments. The above description is provided only to allow those skilled in the art to perfectly understand the scope of the present invention, and those skilled in the art should know that the present invention is defined by the appended claims.

INDUSTRIAL APPLICABILITY

The present invention can be efficiently applied in the field of The present invention can be efficiently applied in the field of secondary battery manufacturing equipment.

**Claims**

1. A notching system comprising:

   a frame;
   a power portion installed on the frame and configured to generate a rotational force at a speed synchronized with a movement speed of an electrode sheet;
   a jig installed on the frame and configured to rotate while being in contact with one surface of the electrode sheet by receiving the rotational force from the power portion;
   a close contact portion installed on the frame and configured to maintain contact between the jig and the electrode sheet passing through a notching area by being in contact with and supporting the other surface of the electrode sheet; and
   a laser irradiation portion installed on the frame and configured to irradiate the electrode sheet with a laser beam through a notching hole,
   wherein the jig is configured to comprise the notching hole formed on an outer peripheral surface in contact with the one surface of the electrode sheet.

2. The notching system of claim 1, wherein

   the jig is configured to comprise a first jig installed corresponding to a tab portion of the electrode sheet and a second jig installed corresponding to a bottom portion of the electrode sheet, and
   the laser irradiation portion is configured to comprise a first irradiation portion installed corresponding to the tab portion of the electrode sheet and a second irradiation portion installed corresponding to the bottom portion of the electrode sheet.

3. The notching system of claim 1, wherein the close contact portion is configured to comprise a first roller and a second roller that are placed on both left and right sides of the jig, respectively.

4. The notching system of claim 1, wherein

   the electrode sheet is supplied in left and right directions by an unwinding portion,
   the jig is installed in contact with an upper surface of the electrode sheet, and
   the close contact portion is configured to be in contact with and support a lower surface of the electrode sheet, allowing the upper surface of the electrode sheet and the jig to make surface contact.

5. The notching system of claim 1, wherein the laser irradiation portion is configured such that a scanner that irradiates the laser beam is located inside the jig.

6. The notching system of claim 1, wherein the notching hole is formed in plurality through which an inner peripheral surface and an outer peripheral surface of a felloe rim of the jig communicate with each other.

7. The notching system of claim 1, further comprising:

   a dust collection portion installed in the notching area and configured to remove foreign matter generated during notching,
   wherein the dust collection portion is configured to comprise a blower configured to separate the foreign matter by generating wind and a suction portion configured to inhale the foreign matter.

8. The notching system of claim 7, wherein the blower is positioned higher than an inner side of the jig and an inner peripheral surface of the felloe rim with reference to the felloe rim of the jig and the suction portion is positioned at a height that encompasses an upper part and a lower part with reference to an outer side of the jig and the inner peripheral surface of the fellow rim.

9. A notching method performed by a notching system, comprising the steps of:

continuously supplying an electrode sheet to a notching area;

bringing a jig into close contact with the electrode sheet in the notching area; and

performing notching by irradiating the electrode sheet with a laser beam,

wherein the bringing of the jig into close contact with the electrode sheet comprises the steps of:

bringing a curved surface of the jig into contact with one surface of the electrode sheet in the notching area and

maintaining contact between the jig and the electrode sheet on one side and the other side of a contact surface between the jig and the electrode sheet.

10. The notching method of claim 9, wherein the bringing of the jig into close contact with the electrode sheet in the notching area comprises the steps of bringing an outer peripheral surface of the jig with a plurality of notching holes formed therein into contact with the electrode sheet and bringing rollers, the electrode sheet, and the jig into close contact with one another at positions on one side and the other side of the notching area.

11. The notching method of claim 10, wherein the performing of notching comprises the steps of rotating the jig in synchronization with a movement speed of the electrode sheet and forming a notching line on the electrode sheet through the notching hole.

12. The notching method of claim 11, wherein the performing of notching utilizes a plurality of notching holes formed through which an inner peripheral surface and an outer peripheral surface of a felloe rim of the jig communicate with each other.

13. The notching method of claim 9, wherein in the supplying of the electrode sheet to the notching area, the electrode sheet is moved in left and right directions, and in the performing of notching, the laser beam is irradiated in a vertical direction onto one surface of the electrode sheet.

Fig. 1

Fig. 2

Fig. 3

Fig. 4

134(132)

142(140)

120

110

151(150)    166(160)    152(150)

z

y

Fig. 5

Fig. 6

Fig. 7

133(131)

(4)        (1)

B

(3) ← - - - - - - - - - - - - → (2)

S

N        (4')        w        (1')        135

c

(3')        (2')

g        h        g

z  x

y

Fig. 8

N        135        133(131)

S

151(150)        152(150)

Fig. 9

S100

START

CONTINUOUSLY SUPPLY ELECTRODE SHEET TO NOTCHING AREA — S110

BRING JIG AND ELECTRODE SHEET INTO CLOSE CONTACT WITH EACH OTHER — S120

CONTACT JIG WITH ONE SURFACE OF ELECTRODE SHEET — S121

MAINTAIN CONTACT — S122

IRRADIATE ELECTRODE SHEET WITH LASER BEAM — S130

ROTATE JIG AT SPEED SYNCHRONIZED WITH MOVEMENT SPEED OF ELECTRODE SHEET — S131

FORM NOTCHING LINE THROUGH NOTCHING HOLE — S132

END

Fig. 10

S120

S110

CONTACT JIG WITH PLURALITY OF NOTCHING HOLES FORMED THEREIN WITH ELECTRODE SHEET — S121-1

MAINTAIN CONTACT USING ROLLERS — S122-1

S130

Fig. 11

| INTERNATIONAL SEARCH REPORT | International application No. |
|---|---|
| | **PCT/KR2024/000802** |

**A.    CLASSIFICATION OF SUBJECT MATTER**

**B23K 26/362**(2014.01)i; **B23K 37/04**(2006.01)i; **B23K 26/082**(2014.01)i; **B23K 26/16**(2006.01)i; **B23Q 11/00**(2006.01)i; **H01M 4/04**(2006.01)i; **H01M 50/531**(2021.01)i

According to International Patent Classification (IPC) or to both national classification and IPC

**B.    FIELDS SEARCHED**

Minimum documentation searched (classification system followed by classification symbols)

B23K 26/362(2014.01); H01M 10/04(2006.01); H01M 50/46(2021.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 시트(electrode sheet), 전극 탭(electrode tab), 레이저(laser), 노칭(notching) 및 롤러(roller)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2016-0109384 A (LG CHEM, LTD.) 21 September 2016 (2016-09-21)<br>See paragraphs [0053]-[0057] and [0072]-[0098] and figures 1-10. | 1,3-6,9-13 |
| Y | | 2,7,8 |
| Y | KR 10-2021-0001077 A (DE&T CO., LTD.) 06 January 2021 (2021-01-06)<br>See paragraphs [0049]-[0061] and figures 3 and 4. | 2 |
| Y | KR 10-2015-0089803 A (DATECHNOLOGY CO., LTD.) 05 August 2015 (2015-08-05)<br>See paragraph [0021] and figure 5. | 7,8 |
| A | KR 10-2019-0106077 A (LG CHEM, LTD.) 18 September 2019 (2019-09-18)<br>See paragraphs [0038]-[0040] and figure 4. | 1-13 |
| A | US 2023-0155160 A1 (PRIME PLANET ENERGY & SOLUTIONS, INC.) 18 May 2023 (2023-05-18)<br>See paragraphs [0063]-[0066] and figure 7. | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 May 2024** | **21 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000802**

| Patent document cited in search report | | | Publication date (day/month/year) | Patent family member(s) | | | Publication date (day/month/year) |
|---|---|---|---|---|---|---|---|
| KR | 10-2016-0109384 | A | 21 September 2016 | KR | 10-1774262 | B1 | 04 September 2017 |
| KR | 10-2021-0001077 | A | 06 January 2021 | KR | 10-2021-0069610 | A | 11 June 2021 |
| | | | | KR | 10-2386160 | B1 | 14 April 2022 |
| KR | 10-2015-0089803 | A | 05 August 2015 | KR | 10-1569798 | B1 | 17 November 2015 |
| KR | 10-2019-0106077 | A | 18 September 2019 | CN | 110870110 | A | 06 March 2020 |
| | | | | CN | 110870110 | B | 11 October 2022 |
| | | | | EP | 3641021 | A1 | 22 April 2020 |
| | | | | EP | 3641021 | B1 | 07 February 2024 |
| | | | | KR | 10-2309536 | B1 | 07 October 2021 |
| | | | | US | 11305451 | B2 | 19 April 2022 |
| | | | | US | 11839993 | B2 | 12 December 2023 |
| | | | | US | 2020-0206965 | A1 | 02 July 2020 |
| | | | | US | 2022-0203572 | A1 | 30 June 2022 |
| | | | | WO | 2019-172506 | A1 | 12 September 2019 |
| US | 2023-0155160 | A1 | 18 May 2023 | CN | 116137352 | A | 19 May 2023 |
| | | | | JP | 2023-074168 | A | 29 May 2023 |

Form PCT/ISA/210 (patent family annex) (July 2022)